# EUROPEAN PATENT APPLICATION

(11) **EP 4 201 220 A1**
(43) Date of publication of application: **28.06.2023**
(21) Application number: 21315293.7
(22) Date of filing: 24.12.2021
(51) Int. Cl.: A23J 3/16, A23J 3/34, A23L 2/66, A23L 2/84

(54) **PLANT-BASED COMPOSITION AND PROCESS OF PREPARING THE SAME**

(71) Applicant: Compagnie Gervais Danone, 75009 Paris (FR)
(72) Inventor: Springett, Mark, 91470 Limours (FR)
(74) Representative: Esselin, Margaux

(57) **Abstract**

The present invention relates to a plant-based composition comprising a mixture comprising:
i) a plant base comprising at least 5% w/w of plant protein and at least 1% w/w of fat;
ii) at least one endoprotease; and
iii) at least one exoprotease.

## Description

### CROSS-REFERENCE TO RELATED APPLICATIONS

None

### FIELD OF THE INVENTION

The present invention generally relates to plant-based compositions, in particular plant-based food compositions, and processes to prepare the same. More specifically, the present disclosure is directed to high protein plant-based food compositions that have reduced viscosity and improved organoleptic qualities.

### BACKGROUND OF THE INVENTION

There is increased interest in plant-based diets among mainstream consumers who consider themselves vegan, vegetarian or flexitarian. To cater to the dietary needs of such consumers a wide variety of plant-based analogues or alternatives to non-vegan food products are increasingly available. Consumers are increasingly looking for plant-based food products which can be used as dairy alternatives and have excellent nutritional properties as well as a pleasant taste profile. In particular, "high protein" food products considered as healthy food are particularly sought by consumers. These include plant-based dairy alternatives such as milks, yogurts, drinkable desserts, protein shakes, etc.

Unfortunately, the formulation of such products to provide a sensory and/or nutritional equivalent to dairy products remains challenging. Indeed, commonly used plant-based proteins such as pulse proteins and soy proteins, are associated with unpleasant off-notes perceived as bitter and/or astringent by the consumers. In addition, the adjunction of plant proteins in food products is also challenging from a texture point of view because high protein content results in thick products having a very high viscosity making it not drinkable or not spoonable which is particularly not desired for liquid food compositions.

Therefore, a need exists for plant-based food products that overcome one or more of the current textural and organoleptic disadvantages noted above.

### BRIEF SUMMARY OF THE INVENTION

The present invention arises from the unexpected finding by the inventors that the use of at least one exoprotease and at least one endoprotease in plant-based beverages comprising proteins. and fats strongly reduced the viscosity due to plant proteins and gives beverages without unpleasant off-notes, more particularly beverages having good taste and flavor.

Thus, the present invention relates to a plant-based composition comprising a mixture comprising:
i) a plant base comprising at least 5% w/w of plant protein and at least 1% w/w of fat;
ii) at least one endoprotease; and
iii) at least one exoprotease.

The present invention also relates to a process for the preparation of a plant-based composition comprising the steps of:
a) providing a mixture comprising a plant base comprising at least 5% w/w of plant protein and at least 1% w/w of fat;
b) mixing the mixture with at least one exoprotease and at least one endoprotease;
c) processing the mixture to provide a plant-based composition having a viscosity comprised between 1 and 200 mPa.s.

The present invention also relates to a plant-based composition obtained by the process as defined above.

The present invention also relates to a plant-based beverage comprising a pant-based composition as defined above.

### DETAILED DESCRIPTION OF THE INVENTION

### Definitions

In the specification and in the claims, the terms "including", "comprising" and "containing" can be used interchangeably. These terms are open-ended terms and should be interpreted to mean "including", but not limited to. Thus, when an object "comprises" or "contains" one or several elements, other elements than those mentioned may also be included in the object. These terms encompass the more restrictive terms "consisting essentially of" and "consisting of." When an object is said to "consist of" one or several elements, the object is limited to the listed elements and cannot include other elements than those mentioned.

It must be noted that as used herein and in the appended claims, the singular forms "a", "an", and "the" include plural references unless the context clearly dictates otherwise. As well, the terms "a", "an", "one or more" and "at least one" can be used interchangeably herein.

As used herein, the term "ppm" shall be taken to mean "parts per million". One milliliter in 1 liter is 1000 ppm and one thousandth of a milliliter (0.001g) in 1 liter is one ppm.

As used herein, the terms "x% (w/w)" and "x% w/w" are equivalent to "x g per 100 g". Unless indicated otherwise, all % value shall be taken to indicate x% w/w.

As used herein, the terms "x% (v/v)" and "x% v/v" are equivalent to "x ml per 100 ml".

In the context of this application, the term "at least" also includes the starting point of the open range. For example, an amount of "at least 95.00 % w/w" means any amount equal to 95.00 percentage by weight or above.

In the context of this application, the term "about" defines a range of plus or minus 10% of the cited value. For example, an amount of "about 20 weight %" means any amount within the range of 18.00 to 22.00 weight %.

As used herein, the terms "vegan" or "plant-based" shall be taken to mean a composition or product which comprises plant or plant-derived matter but which does not comprise animal or animal-derived matter, including but not limited to dairy, egg, fish, shellfish, meat, dairy milk and insects.

As used herein, the term "dairy" shall be taken to mean a composition or product comprising or consisting of mammalian milk matter, i.e., the lacteal secretion obtainable by milking.

As used herein, the terms "free" or "free from" shall be taken to mean that a given substance is not added to make a composition or product but, unless specified, where trace amounts or contaminants thereof may be present.

As used herein, the term "added sugar" shall refer to sugars that are added during the production or processing of foods (e.g., refined sugars that may be added to a plant base of processed plant matter) as opposed to sugars naturally occurring in said foods. Added sugars include sugars (free, mono- and disaccharides), sugars from syrups (e.g., rice or cereal syrups) and honey, and sugars from concentrated fruit or vegetable juices that are in excess of what would be expected from the same volume of 100 percent fruit or vegetable juice of the same type.

As used herein, the terms plant-based alternative, analogue or substitute shall be taken to mean a plant-based food or beverage composition that is formulated to simulate the organoleptic and/or functional qualities of a non-plant-based product.

The "dry matter" of a product corresponds to the weight of non-volatile components present in the product relatively to the total weight of the product. The dry matter is expressed as a weight percentage. The "non-volatile components" correspond to the solids that remain after total evaporation of water of the product.

The expression "protein concentrate" as used herein, generally refers to protein derived from a plant source that has been extracted from the plant source and purified. Protein concentrate may comprise up to about 60%, 70% or more total protein on a dry matter basis e.g., 50% up to 70% w/w. Preferably, the rest of the dry matter of the vegetal protein concentrate comprises carbohydrates such as starch and fibers. A protein concentrate may comprise a single type of protein or a combination of different types of proteins. A protein concentrate may comprise a protein from a single vegetal variety or a combination of different vegetal varieties. A protein concentrate can be deflavored or not.

The expression "protein isolate" as used herein, generally refers to protein derived from plant source that has been extracted from the plant source and purified. Protein isolate may comprise greater than or equal to about 70%, 75%, 80%, 85% 90% w/w, or more total protein on a dry matter basis e.g., 70% to 95% w/w. A protein isolate may comprise a single type of protein or a combination of different types of proteins. A protein isolate may comprise a protein from a single vegetal variety or a combination of different vegetal varieties. A protein isolate may comprise at least one protein isolate which has been hydrolyzed and/or deflavored. By way of example a protein isolate may comprise a combination of at least one protein isolate and at least one protein isolate which has been hydrolyzed.

As intended herein, the expression "hydrolyzed proteins" refers to proteins which have been hydrolyzed into their amino acids and peptides components. The hydrolysis of the proteins may be carried out by any method well known to the person skilled in the art. By way of example, the hydrolysis can be accomplished by a chemical process, e.g., by adding the protein in an acid-based solution or using various enzymes such as proteases.

As intended herein, the expression "deflavoured" refers to proteins which have been treated to reduce or remove off-notes such as bitterness or to provide a neutral tasting food preparation ingredient.

### Plant-based composition

Preferably, the plant-based composition according to the present embodiments is particularly suited for use in a food product, in particular a liquid food product, more particularly a beverage. Thus, embodiments provide a plant-based composition suitable for consumption.

Embodiments also provide a plant-based composition as defined above for use as a beverage or in a beverage.

Embodiments also provide plant-based food products, in particular beverages, more particularly plant-based beverages, comprising the plant-based composition according to the present embodiments.

### Beverage

As intended herein, the term beverage include any drink suitable for animal, in particular human consumption.

Preferably, the plant-based composition according to the present embodiments is selected from a non-dairy milk, a flavored non-dairy milk drink, a coffee drink, a hot chocolate drink, a frozen beverage, and a smoothie.

By way of example of non-dairy milk according to the present embodiments it is possible to mention soy milk, almond milk, rice milk, chia milk, oat milk, pea milk, hazelnut milk, nut milk, wheat milk, quinoa milk, buckwheat milk, cashew milk, pecan milk, macadamia milk, pistachio milk, walnuts milk, hemp milk, pumpkin milk, sesame milk, tiger nut milk, sunflower milk, coconut milk, lupin milk, faba milk, etc.

### Viscosity

Preferably, the plant-based composition or the plant-based food product according to the present embodiments has a viscosity of lower than 200 mPa.s, more preferably, lower than 150 mPa.s and most preferably lower than 100 mPa.s, at 10°C, at a shear rate of 64 s⁻¹. In embodiments, the plant-based composition has a viscosity range of 1 to 200 mPa.s, 1 to 100 mPa.s, 1 to 90 mPa.s, 1 to 60 mPa.s, 1 to 50 mPa.s, 1 to 30 mPa.s, 1 to 20 mPa.s, 1 to 15 mPa.s, 1 to 10 mPa.s at 10°C, at a shear rate of 64 s⁻¹. In embodiments, the plant-based composition, or the plant-based food prodcut has a viscosity range of 10 to 60 mPa.s, 10 to 50 mPa.s, 10 to 30 mPa.s, 10 to 20 mPa.s at 10°C, at a shear rate of 64 s⁻¹. The viscosity can be measured by any method well known by the person skilled in the art. By way of example, it is possible to use a Rheometer at a shear rate of 64 s⁻¹ during 10 to 90 s at 10°C.

### Particle size distribution

Preferably, the plant-based composition or the plant-based food product has a particle size distribution having at least 90% particles with a maximum dimension equal to or lower than 100 µm including 98 µm, 95 µm, and 90 µm. Preferably, the plant-based composition or the plant-based food product according the present embodiments has a particle size distribution having at least 90% particles with a maximum dimension equal to or lower than 90 µm including 88 µm, 86 µm, 84 µm, 82 µm, 80 µm, 78 µm, 76 µm, 74 µm, 72 µm, 70 µm, 68 µm, 66 µm, 64 µm, 62 µm, and 60 µm.

Preferably, the plant-based composition or the plant-based food product according to the present embodiments has a particle size distribution with a minimum dimension equal to or greater than 55 µm including 58 µm, 60 µm, and 62 µm.

In embodiments, the particle size distribution of the plant-based composition, in particular the plant-based food product, according to the present embodiments is comprised between 60 µm and 91 µm for example from 60 µm to 65 µm, from 60 µm to 70 µm, from 60 µm to 75 µm, from 60 µm to 80 µm, from 60 µm to 85 µm, from 60 µm to 90 µm, from 60 µm to 90.5 µm, from 70 µm to 90 µm, from 75 µm to 85 µm, from 80 µm to 90 µm, from 85 µm to 90 µm. The characterization of the particle size distribution can be performed by any method well known by the person skilled in the art. By of example of methods of characterization of the particle size distribution it is possible to mention laser diffraction, dynamic light scattering and image analysis.

### Plant base

Preferably, the plant base according to the present embodiments comprises at least one plant-matter and can be in any form such as a liquid, a suspension, in particular an aqueous suspension or a slurry.

Preferably, the plant-matter is selected from the group consisting of legumes, pulses, nuts, seeds, cereals and/or combinations thereof. Preferably, the plant-matter according to the present embodiments comprises protein and fat. By way of example, the plant-matter may be in the form of a vegetable milk, a vegetable butter, a powder, a juice, a retentate, a flour, milled, ground, soaked, dehulled, a lyophilized powder, a powder mixed with water, a powder mixed with a milk, in particular vegetable milk, optionally enzymatic hydrolyzed and/or homogenized etc.

The pulses according to the present embodiments can be chosen among any pulses well known by the person skilled in the art. Preferably, the pulses according to the present embodiments are selected from the group consisting of split peas, field peas, dry peas, lentil, chickpeas, garbanzo bean, faba beans, konda, navy bean, white navy bean, white pea bean, pea bean, cow pea, horse bean, haricot, pinot bean, mottled bean, small red bean, red Mexican bean, kidney bean, black bean, black turtle bean, cranberry bean, roman bean, speckled sugar bean, lima bean, faba bean, Madagascar bean, green gram, mung bean, green bean, black gram, urad dal, soy and/or lupin and combinations thereof. In preferred embodiments, the pulses according to the present embodiments are pea, faba bean, soy, chickpea and combination.

The nuts according to the present embodiments can be chosen among any nuts well known by the person skilled in the art. Preferably, the nuts are selected from the group consisting of almonds, cashews, pecans, macadamias, hazelnuts, pistachio, walnuts and combinations thereof. In preferred embodiments, the nut is almond.

The seeds according to the present embodiments can be chosen among any seeds well known by the person skilled in the art. Preferably, the seeds according to the present embodiments are selected from the group consisting of hemp, pumpkin, quinoa, sesame, tiger nut, flax, chia, sunflower, coconut and combinations thereof.

The cereals according to the present embodiments can be chosen among any cereals well known by the person skilled in the art. Preferably, the cereals according to the present embodiments are selected from the group consisting of wheat, rye, spelt, barley, oat, millet, sorghum, rice, teff and combinations thereof. In preferred embodiments the cereal is oat.

By way of example, the plant base may be an aqueous suspension comprising water and plant matter. Processes for the preparation of such aqueous suspensions are known in the art and typically comprise mechanical and/or enzymatic disruption of the plant-matter and hydration and/or combination with a solution, followed by mechanical separation of an aqueous fraction from starchy and/or fibrous matter, e.g., by decanting, centrifugation or filtration.

By way of example, the plant base may comprise a pulse, a seed or a nut butter such as sunflower, sesame, soy, almond, cashew, hazelnut or peanut butter. Processes for the preparation of butters typically comprise wet or dry grinding roasted or unroasted pulses, seed or nuts to a paste having a particle size suitable for the preparation of beverages.

By way of example, the plant base may comprise a hydrolyzed cereal suspension such as an oat milk or syrup. Processes for the preparation of such cereal suspensions typically comprise mixing an oat material (such as rolled oats, milled oats, oat flour or oatmeal) with water and treated enzymatically by amylases to hydrolyze starch followed by removal of suspended matter.

By way of example, the plant base may comprise a powder, in particular a freeze-dried powder of legumes, pulses, nuts, seeds or cereals, and a vegetable milk of legumes, pulses, nuts, seeds or cereals, such as for example a mixture of soy powder and soy milk.

By way of example, the plant base may comprise at least one vegetable powder, in particular at least one freeze dried vegetable milk powder, and at least one vegetable milk of legumes, pulses, nuts, seeds or cereals, such as for example a mixture of freeze-dried soymilk powder and soy milk.

By way, of example, the plant base may comprise a retentate of a juice of legumes, pulses, nuts, seeds or cereals, such as for example a retentate of soy juice. Method for obtaining a retentate are well known by the person skilled in the art. By way of example, the retentate may be obtained by a process of filtration of a juice of legumes, pulses, nuts, seeds or cereals. As intended herein, the retentate is the phase which does not pass through the filter.

By way of example, the plant base may comprise a mixture of powder, in particular a freeze-dried vegetable milk powder of legumes, pulses, nuts, seeds or cereals and a retentate of a juice of legumes, pulses, nuts, seeds or cereals, such as for example a mixture of soymilk powder and soy juice retentate.

By way of example, the plant base may comprise a mixture of a vegetable milk of legumes, pulses, nuts, seeds or cereals and a retentate of a juice of legumes, pulses, nuts, seeds or cereals, such as for example a mixture off soy milk and soy juice retentate.

As intended herein, the protein according to the present embodiments are preferably vegetal protein, i.e., protein derived from a plant source. The protein according to the present embodiments, preferably come from the plant-matter of the plant base as defined above. In particular, the protein according to the present embodiments is preferably selected from the group consisting of soy protein, pulse protein, cereal protein, nut protein and combinations thereof. More preferably, the protein according to the present embodiments is selected from the group consisting of soy protein, pea protein, faba protein, almond protein, oat protein and combinations thereof. The protein according to the present invention, may comprise at least one a protein isolate or at least one protein concentrate, and/or combinations thereof. The protein according to the present invention, may also comprise a mixture of protein derived from the same or different plant sources. The protein according to the present invention, may be partially hydrolysed by the enzymatic activity of the at least one endoprotease; and at least one exoprotease of the invention.

As intended herein, the fat according to the present invention is preferably a vegetable fat, i.e., fat derived from a plant source. In an embodiment, the fat of the plant base come from the plant-matter as defined above.

In embodiments, the plant base further comprises at least one fat source. The fat source may be in the form of an oil, a cream, a butter, a paste, a milk, a powder, a lyophilized powder, a powder and any other form well known by the person skilled in the art.

Preferably, the fat source according to the present embodiments is selected from the group consisting of coconut cream, coconut oil, corn oil, almond oil, chia oil, safflower oil, soybean oils, linseed oil, soy oil, grape seed oil, hazelnut oil, rice bran oil, sunflower oil, sesame oil, açaí oil, palm oil, avocado oil, brazil nut, passion fruit oil, cashew oil, olive oil, coconut butter, almond butter, peanut butter, hazelnut butter, cashew butter, nut paste, almond paste, and/or combinations thereof.

In embodiments, the plant base may further comprise carbohydrates. Preferably, carbohydrates according to the invention are selected from sugars and fibers.

Preferably, the plant base according to the present embodiments comprises from 0.5 to 10% w/w carbohydrates, more preferably from 0.5 to 5, more preferably from 0.5 to 2.5% w/w, even more preferably from 0.5 to 1% w/w.

Example of sugars according to the present embodiments, include fructose, galactose, glucose, saccharose, sucrose, dextrose, maltose, fructose syrup, sugarcane syrup, and high fructose corn syrup.

By way of examples of fibers according to the present embodiments it is possible to cite fibers found in cereals, fruits, pulses, and vegetables, in particular in fruits, dark green vegetables, orange vegetables, cook dry bean, starchy vegetables, whole grains, more particularly in peas, soybeans, lupins, oats, rye, chia, barley, figs, plums, prunes, berries, bananas, apples, pears, broccoli, carrots, root tuber, root vegetable, sweet potato, nuts, almond, wheat, corn, chicory root and/or combinations thereof.

Particularly preferred is a base that comprises added sugar, where the total carbohydrate content of the plant base is derived from plant-matter selected from the group consisting of legumes, nuts, seeds, cereals and/or combinations thereof and added sugar.

In embodiments the added sugar is selected from the group consisting of beet sugar, brown sugar, brown rice sugar, cane juice, cane syrup, cane sugar, caramel, coconut sugar, corn syrup solids, corn syrup, refined sugar, confectioner's sugar, date sugar, maple syrup, malt, molasses, raw sugar, sugar, honey, agave and/or combinations thereof.

Preferably, the plant-based composition, in particular the plant-based food product according to the present embodiments comprises from 0 to 7% w/w added sugar, more preferably from 0 to 2.5% w/w.

### Proton and fat amounts

Preferably, the plant-based composition and the plant-based food product, in particular the beverage, according to the present embodiments comprise at least 5% w/w protein. Preferably, the plant-based composition and the plant-based food product, in particular the beverage, according to the present embodiments comprise up to 20% w/w protein. By way of example, the plant-based composition and the plant-based food product, in particular the beverage, according to the present embodiments comprise from 5 to 20% w/w, or from 5 to 18% w/w, or from 5 to 15% w/w, or from 5 to 12% w/w, or from 5 to 11.5% w/w, or from 5 to 11% w/w, or from 5 to 10% w/w, or from 5 to 9% w/w, or from 5% to 8%% w/w protein. More preferably the plant-based composition and the plant-based food product, in particular the beverage, according to the present embodiments comprise from 5% to 12% w/w protein even more preferably from 7 to 10% w/w protein and most preferably about 10% w/w protein.

Preferably, the plant-based composition and the plant-based food product, in particular the beverage, according to the present embodiments comprise at least 1% w/w fat. Preferably, the plant-based composition and the plant-based food product, in particular the beverage, according to the present embodiments comprise up to 12% w/w fat. By way of example, the plant-based composition and the plant-based food product, in particular the beverage, according to the present embodiments comprise from 1 to 3% w/w, or from 3 to 4% w/w, or from 3 to 5% w/w, or from 3 to 5.5% w/w, or from 3 to 6% w/w, or from 3 to 10% w/w fat.

### Water

The plant-based composition, in particular the plant-based food product, according to the present embodiments may also comprise water.

Water is typically present in an amount balancing the amounts of other ingredients to 100% by weight. In an embodiment water is present in an amount between 70% and 99% by weight, for example, from 70% to 75%, or from 75% to 80% or from 80% to 85% or from 80% to 85% or from 90% to 95%. In one embodiment the water quality is monitored to ensure sufficiently low level of cations to ensure emulsification stability is not impacted. The water can be selected from any type of water well-known by the person skilled in the art such as tap water, demineralized water, desalinated water, water filtered by reverse osmosis, deionized water, or low ions content water. The total cation content can be from about 60 ppm (40 ppm for divalent ions and 20 ppm for monovalent ions) and the hardness of water can be 6 gram/gallon or less.

### Buffering agent

In an embodiment, the plan-based composition, in particular the plant-based food product, also comprises at least one buffering agent. The buffering or pH adjusting agent according to the present embodiments may be any buffering or pH adjusting agent well known to the person skilled in the art. By way of example of such agents it is possible to cite monophosphates, diphosphates, sodium mono- and bicarbonates, potassium mono- and bicarbonates, for example, potassium phosphate, dipotassium phosphate, potassium polyphosphates, sodium bicarbonate, trisodium citrate (also referred to as sodium citrate), sodium phosphate, disodium phosphate, trisodium phosphate and sodium polyphosphates, sodium bicarbonate, calcium carbonate and/or mixtures or combinations thereof.

The person skilled in the art will be able to adapt the amount of buffering agent to provide a composition with a pH value of at least 60, preferably from 6 to 8 or from 6.5 to 7.9 or from 7 to 7.8 or from 7.2 to 7.5.

### Protease

As intended herein, the terms exoprotease and endoprotease are encompassed by the term protease which is equivalent to peptidase or proteinase and relates to enzymes which are able to catalyze the breakdown of proteins into smaller polypeptides or single amino acids. Typically, proteases act by cleaving the peptide bonds within proteins by hydrolysis, i.e. a reaction where water breaks the peptide bond between amino acids.

Typically, exoproteases hydrolyze the peptide bond between amino acids at the ends of the protein molecule and endoproteases hydrolyze the peptide bonds between amino acids in the interior of the protein molecule.

In a particular embodiment, the at least one exoprotease and at least one endoprotease is a mixture of protease having exoprotease and endoprotease activity. In an alternative embodiment, the at least one exoprotease and at least one endoprotease is a protease having both exoprotease and endoprotease activity. Preferably, the protease according to the present embodiments is selected from the group consisting of serine protease, cysteine protease, threonine protease, aspartic protease, glutamic protease, metalloprotease, asparagine peptide lyase, and combinations thereof.

The protease according to the present embodiments is preferably derived from a bacterial or a fungal strain, a plant or an animal.

Preferably, the bacterial protease according to the present embodiments is derived from a strain of *Bacillus*, preferably a strain of *Bacillus subtillis* or a strain of *Bacillus licheniformis*.

Preferably, the fungal protease according to the present embodiments is derived from a strain of *Aspergillus*, preferably a strain of aculeatus, a strain of *Aspergillus niger*, a strain of *Aspergillus oryzae.*

Preferably, the plant-derived protease according to the present embodiments is selected from the group consisting of papain, bromeline, actinidine ficin and mixtures or combinations thereof.

Preferably, the animal-derived protease according to the present embodiments is selected from the group consisting of pepsin, trypsin, aminopeptidase, carboxypeptidase, chymotrypsin and mixtures or combinations thereof.

In embodiments the proteases of the invention may be fully or partially inactivated or denatured subsequent to hydrolysis of the proteins in the plant base.

In embodiments the exoprotease according to the present invention, is selected from the group consisting of carboxypeptidase leucyl peptidase aminopeptidase and combinations or mixtures thereof.

In embodiments the endoprotease according to the present embodiments, is selected from the group consisting of aspartic endopeptidases, cysteine endopeptidases, glutamic endopeptidases, metalloendopeptidases, serine endopeptidases, threonine endopeptidases, pepsin, chymotrypsine, thermolysine and trypsin and combinations or mixtures thereof.

### Further ingredients

The plant-based composition, in particular the plant-based food product, according to the present embodiments can further comprise at least one further ingredient selected from the group consisting of water, at least one flavoring agent, at least one sweetener, at least one fruit or at least one fruit preparation, at least one stabilizing agent, at least one coloring agents, at least one vitamin, oilseeds, nuts, cereals, and/or combinations thereof.

Advantageously, the flavoring agent is used to enhance and/or change the taste of the composition. The flavoring agent according to the present embodiments can be any flavoring agent well known to the person skilled in the art e.g., fruit flavors such as citrus flavor, strawberry flavor, peach flavor, apricot flavor, raspberry flavor, orange flavor, apple flavor, pear flavor, etc.., vanilla flavors, caramel flavors, coffee flavors, almond flavors, and chocolate flavors.

In an embodiment, the plan-based composition, in particular the plant-based food product comprises at least one stabilizing agent. The stabilizing agent can for example be a starch, a pectin, a guar, a xanthan, a carrageenan, a locust bean gum, a gellan gum or a mixture thereof. The amount of stabilizing system is typically of from 0.5 to 5% by weight.

The plant-based composition, in particular the plant-based food product, according to the present embodiments may further comprise at least one vitamin preferably selected from vitamin A, D, B2, B12 and combinations thereof.

Advantageously, sweeteners are added to enhance the taste of the flavorings provided and/or provide overall sweetness to the plant-based composition. Sweeteners according to the present embodiments can be chosen among any sweetener well known to the person skilled in the art such as for example sugar, fructose, glucose, maltose, sucrose, dextrose, high fructose corn syrup, sugarcane syrup, sucralose, acesulfamK, aspartam, saccharine, sugar substitute like sorbitol, mannitol, xylitol, and combinations thereof.

Preferably, the sweetener according to the present embodiments is present in the plant-based composition in an amount between 1 and 10% w/w relative to the total weight of the ingredient of the composition.

In an embodiment, the plant-based composition, in particular the plant-based food product, may comprise a fruit or a fruit preparation, or an oilseed, nut or cereal slurry.

As used herein the term "fruit" refers to any fruit form, including for example full fruits, pieces, purees, concentrates, juices etc. Examples of fruits include for example strawberry, peach, apricot, mango, apple, pear, raspberry, blueberry, blackberry, passion, cherry, pineapple, banana, fig, prune, coconut, quince, kiwi, and mixtures or associations thereof, such as peach-passion.

The fruits can be for example provided as:
- frozen fruit cubes, for example 10 mm fruit cubes, for example Individual Quick Frozen fruit cubes, for example strawberry, peach, apricot, mango, apple, pear fruit cubes or mixtures thereof;
- Aseptic fruit cubes, for example 10 mm fruit cubes, for example strawberry, peach, apricot, mango, apple or pear fruit cubes or mixtures thereof;
- fruit purees, for example fruit purees concentrated from 2 to 5 times, preferably 3 times, for example aseptic fruit purees, for example strawberry, peach, apricot, mango, raspberry, blueberry or apple fruit purees or mixtures thereof;
- single aseptic fruit purees, for example strawberry, raspberry, peach, apricot, blueberry or apple single aseptic fruit purees or mixture thereof;
- frozen whole fruits, for example Individual Quick Frozen whole fruits, for example blueberry, raspberry or blackberry frozen whole fruits, or mixtures thereof;
and/or mixtures thereof.

A fruit preparation according to the present embodiments can for example comprise fruit in an amount of from 30 to 80% by weight for example from 50 to 70% by weight.

The fruit preparation can comprise pH modification agents such as citric acid. The fruit preparation can have a pH of from 2.5 to 5, preferably of from 2.8 to 4.2.

Oilseed slurries according to the present embodiments can comprise almond paste, pistachio paste, hazelnuts past, nut paste, etc. Cereal slurries according to the present embodiments can comprise oat flour, oat syrup, etc.

Typically, a fruit preparation or slurries, in particular oilseed or cereal slurries, can be added in an amount of 1-30% by weight with reference to the total amount of the plant-based composition or for example from 1% to 25% w/w, from 1 % to 20% w/w, from 1% to 15% w/w, from 1% to 10% w/w.

The ingredients and/or components of the plant-based composition, in particular the plant-based food product, and the amounts thereof can be typically such that the composition has a brix degree of from 1 to 65 brix, for example from 1 to 10 brix, or from 10 to 15 brix, or from 15 to 20 brix, or from 20 to 25 brix, or from 25 to 30 brix, or from 30 to 35 brix, or from 35 to 40 brix, or from 40 to 45 brix, or from 45 to 50 brix, or from 50 to 55 brix, or from 55 to 60 brix, or from 55 to 60 brix, or from 60 to 65 brix. The Brix degree corresponds to the sugar content of a composition. Methods for measuring the brix degree are well-known by the person skilled in the art. For example, when measuring the brix degree of a fruit preparation, the fruit preparation is filtered on a sieve of 1mm, and the supernatant (thus, without fruit pieces) is collected.

### Packaging

Preferably the plant-based composition, in particular the plant-based food product, more particularly the beverage, according to embodiments of the invention is provided in a sealed or sealable container, or in a bottle, or in a can containing about 50 g, 60 g, 70 g, 75 g, 80 g, 85 g, 90 g, 95 g, 100 g, 105 g, 110 g, 115 g, 120 g, 125 g, 130 g, 135 g, 140 g, 145 g, 150 g, 200 g, 300 g, 320 g or 500 g or 750g, or 900g, or 1000g about 1 oz, 2 oz, 3 oz, 4 oz, 5 oz, 6 oz, 12 oz, 15 oz, 17 oz, 20 oz, or 35 oz or about 150 ml, 200 ml, 220 ml, 230 ml, 240 ml, 250 ml, 300 ml, 320 ml, 330 ml, 340 ml, 350 ml, 370 ml, 400 ml, 440 ml, 470 ml, 500 ml, 550 ml, 1000 ml, or 1500 ml of product.

In embodiments, the plant-based composition, in particular the plant-based food product, more particularly the beverage, according to embodiments of the invention is provided in a sealed or sealable container, or a bottle, or a can containing about 50 g to 500 g, 60 g to 500 g, 70 g to 500 g, 75 g to 500 g, 80 g to 500 g, 85 g to 500 g, 90 g to 500 g, 95 g to 500 g, 100 g to 500 g, 105 g to 500 g, 110 g to 500 g, 115 g to 500 g, 120 g to 500 g, 125 g to 500 g, 130 g to 500 g, 135 g to 500 g, 140 g to 500 g, 145 g to 500 g, 150 g to 500 g, 200 g to 500 g, 300 g to 500 g, 320 g to 500 g or 500 g or about 150 ml to 1000 ml, 200 ml to 1000 ml, 220 ml to 1000 ml, 230 ml to 1000 ml, 240 ml to 1000 ml, 250 ml to 1000 ml, 300 ml to 1000 ml, 320 ml to 1000 ml, 330 ml to 1000 ml, 340 ml to 1000 ml, 350 ml to 1000 ml, 370 ml to 1000 ml, 400 ml to 1000 ml, 440 ml to 1000 ml, 470 ml to 1000 ml, 500 ml to 1000 ml, 550 ml to 1000 ml, or 1000 ml to 1500 ml of product. In embodiments, the plant-based composition, in particular the plant-based food product, more particularly the beverage, according to embodiments of the invention is provided in a sealed or sealable container or a bottle or a can containing about 1 oz to 12 oz, 2 oz to 12 oz, 3 oz to 12 oz, 4 oz to 12 oz, 5 oz to 12 oz, 6 oz to 12 oz, 12 oz, 15 oz, 17 oz, 20 oz, or 35 oz product by weight.

Preferably the plant-based composition, in particular the plant-based food product, more particularly the beverage, according to embodiments of the invention, may be stored, transported and/or distributed at a temperature of from 1°C to 10°C for at least about 30 days, at least about 60 days or at least about 90 days from packaging and remain suitable for consumption.

### Process for the preparation of a plant-based composition

The process for the preparation of a plant-based composition according to the present embodiments is particularly suited for the preparation of a plant-based food product, in particular a plant-based liquid food product, more particularly a beverage.

Thus, embodiments provide a process for the preparation of a plant-based composition comprising the steps of:
a) providing a mixture comprising a plant base comprising at least 5% w/w protein and at least 1% w/w fat;
b) mixing the mixture with at least one endoprotease and at least one exoprotease;
c) processing the mixture to provide a plant-based composition having a viscosity comprised between 1 and 150 mPa.s.

Preferably, the at least one endoprotease and the at least one exoprotease according to the present embodiments are as defined above.

Preferably, the process as defined above may further comprise at least one step d) of heat treatment before and/or after the step b) of mixing the mixture with at least one endoprotease and at least one exoprotease.

Preferably, the process according to the present embodiments, may further comprise a step e) of homogenization of the mixture before and/or after the step b) of mixing the mixture with at least one endoprotease and at least one exoprotease.

Preferably, the process as defined above may further comprise a step f) of concentration before and/or after the step b) of mixing the mixture with at least one endoprotease and at least one exoprotease.

Preferably, the process as defined above may further comprise a step g) of inactivation of the protease after the step b) of mixing the mixture with at least one endoprotease and at least one exoprotease.

Preferably, the process according to the present embodiments may further comprise a step of adding at least one buffering agent before and/or after the step b). Preferably, the buffering agent according to the present embodiments is as defined above.

Preferably, the process according to the present embodiments may further comprise a step of adding at least one further ingredient selected from the group consisting of water, at least one flavoring agent, at least one sweetener, at least one fruit or at least one fruit preparation, at least one stabilizing agent, at least one coloring agents, at least one vitamin, oilseeds, nuts, cereals, and/or combinations thereof. Preferably, the at least one further ingredient is as defined above.

Preferably, the process according to the present embodiment may further comprise a step of packaging, bottling, or filling components.

### Mixing

Preferably, the mixing of the mixture comprising a plant base comprising at least 5% w/w protein and at least 1% w/w fat according to the present embodiments with at least one endoprotease and at least one exoprotease can be carried out by any methods well known by the person skilled in the art.

Bay way of example, the mixing may include one or more means of blending, mixing, combining, stirring, and/or agitating ingredients such as shear mixer, high shear rate mixer, food processor, stirrer, etc.

Preferably, during the mixing of the mixture with the protease, hydrolysis of the peptide bonds between amino acids of the proteins of the mixture occurs.

Preferably, the mixing step b) is performed at a temperature comprised between 35°C and 60°C, for example during 10 to 80 minutes, for example at a pH comprised between 5 and 8. The optimal conditions of action of the at least one endoprotease and the at least one exoprotease according to the present embodiments can be easily determined by the person skilled in the art.

### Heat treatment

Heat treatments are known by the person skilled in the art as, for example, pasteurization or sterilization. Preferably, heat treatments are used to eliminate micro-organism contaminants such as, for example, bacteria. Heat treatments may be performed in conventional heat exchangers, such as tube or plate heat exchangers. The heat treatment may, for example, be performed at a temperature of from 80°C to 150°C, for example, during 2 seconds to 10 minutes.

In embodiments, the process as defined above comprises one heat treatment before the step b) of mixing the mixture with at least one endoprotease and at least one exoprotease.

In embodiments, the process as defined above comprises two steps of heat treatment. Preferably, the process according to the present embodiments comprises a step d1) of heat treatment before the step b) of mixing the mixture with at least one endoprotease and at least one exoprotease and a step d2) of heat treatment after the step b) of mixing the mixture with at least one endoprotease and at least one exoprotease.

### Homogenization

Homogenization of the mixture according to the present embodiments may be performed by any method well-known by the person skilled in the art. The homogenization can be a single step homogenization or a double step homogenization.

### Concentration

The concentration according to the present embodiments may be performed according to any well-known concentration methods. Typically, the concentration step provides a plurality of fractions. By way of example of fractions which can be obtained, it is possible to cite a heavy phase and a light phase, such as a retentate phase and a permeate phase. Preferably, the higher density phase is rich in protein, starch, insoluble fibers and fat and the lower phase is rich in soluble proteins, peptides, carbohydrates, fiber, minerals, and other vegetable compounds.

Preferably, the concentration according to the present embodiments performed by ultrafiltration.

Preferably, the concentration step is performed before and/or after the step b) of mixing the mixture with at least one endoprotease and at least one exoprotease.

Preferably, the concentration step is performed at a temperature comprised between 4°C and 90°C.

### Inacutivation

The inactivation of the at least one exoprotease and the at least one endoprotease can be performed by any method well-known by the person skilled in the art. By way of example of inactivation method according to the present embodiments, it is possible to cite heat treatment and/or pH modification and/or substrate depletion.

Inactivation of the protease according to the present embodiments can be performed by heat treatment only. Preferably, the deactivation can take place at a temperature comprised between 85 and 150°C, for example between 90 and 150°C, or between 90 and 100°C, or between 95 and 120°C, or between 100 and 150°C, for example during 3 s to 5 min for example during 4 s to 60 s, or during 4 s to 10 s.

Inactivation of the protease according to the present embodiments can be performed by changing the pH alone of by changing the pH after a heat treatment. Preferably, when inactivation by changing the pH is used, the mixture is acidified by adding acids such as hydrochloric acid before being neutralized by adding alkali such as sodium hydroxide.

Preferably, for the inactivation of the protease by changing the pH, a pH comprised in the range of 3 to 8, for example 3 to 5 or 3.5 to 4.5 is used.

### Further processing

In embodiments, the plant-based composition is recovered preferably after the step g) of inactivation of the protease.

The plant-based composition according to the present embodiments may optionally be cooled at a temperature comprised between 0°C and 25°C, by way of example between 0°C and 20°C, between 4°C and 15°C, or between 5°C and 10°C.

The process according to the present embodiments may optionally comprise a step of packaging, bottling, or filling the plant-based composition in one or more bottles, jars, cans, cartons, and/or any other appropriate container or in a from suitable for commercial sale or use.

The plant-based composition according to the present embodiments may also be processed for example to a further food form, such as for example smoothed.

The plant-based composition according to the present embodiments may also optionally be stored, by way of example in a tank.

The plant-based composition according to the present embodiments may also optionally be used as an ingredient involved in preparing a food.

The invention will be further described by the following non-limiting Examples.

### EXAMPLE 1

The inventors have compared the texture and organoleptic properties of a plant-based composition according the present invention prepared using the method described below and a plant-based composition prepared without protease.

### 1. Method

### 1.1. Plant-based composition comprising 10% w/w proton (Example 1 according to the present invention")

A plant base is prepared by mixing 5 to 15% of spray-dried soymilk powder with 75 to 95% of soy milk. Water is then added to obtain a mixture comprising 10% w/w protein and about 5.6% w/w fat. The mixture is stirred for 30 minutes at a temperature of about 40°C.

The mixture is then homogenized using a two-stage homogenization process (60 bars and 150 bars) and heat treated at a temperature of about 95°C for 5 to 10 minutes.

Then, 0.4% w/w of an exoprotease which is an aminopeptidase having exoprotease and endoprotease activity is added to the mixture. The mixture is then stirred at 50°C for 1 hour. The protease is then inactivated by heat treatment at a temperature of 95°C for 10 minutes.

### 1.2. Preparation of a plant-based composition without protease (Comparative example 1)

A plant-based composition comprising 10% w/w of soy protein and 5.6% w/w fat has been prepared using the same protocol as disclosed in point 1.1. but without the step of addition of protease.

### 1.3. Plant-based composition comprising 7% w/w protein (Example 2 according to the present invention)

A plant base is prepared by mixing 3 to 10% of spray-dried soymilk powder with 88 to 98% of soy milk. Water is then added to obtain a mixture comprising 7% w/w protein and about 4% w/w fat. The mixture is stirred for 30 minutes at a temperature of about 40°C.

The mixture is then homogenized using a two-stage homogenization process (60 bars and 150 bars) and heat treated at a temperature of about 95°C for 5 to 10 minutes.

Then, about 0.4% w/w of an exoprotease which is an aminopeptidase having exoprotease and endoprotease activity is added to the mixture. The mixture is then stirred at 50°C for 1 hour. The protease is then inactivated by heat treatment at a temperature of 95°C for 10 minutes.

### 1.4. Preparation of a plant-based composition without protease (Comparative example 2)

A plant-based composition comprising 7% w/w of soy protein and 4% w/w fat has been prepared using the same protocol as disclosed in point 1.3. but without the step of addition of protease.

### 2. Analysis

**2.1.** The viscosity of the plant-based compositions obtained with the above-described protocol have been determined using the rheometer Anton Paar MCR 302 (64 s⁻¹; 10°C).
**2.2.** The particle size distribution of the plant-based compositions have been determined using a particle size analyzer Malvern Mastersizer3000.

### 3. Results

### 3.1. Organoleptic properties

A taste test was performed by a panel of trained testers to compare the organoleptic properties of the plant-based composition according to the present invention (Example 1 and Example 2) and the plant-based composition without protease (Comparative Example 1 and 2). A significant improvement in off-notes, bitterness and astringency was observed in the plant-based compositions according to the present invention. Indeed, a good taste and a good flavor have been attributed to the plant-based compositions according to the invention. This is surprising as proteolytic hydrolysis is known to result in increased off-notes flavors.

### 3.2. Viscosity

The measurements of the viscosity are presented in Table 1 below:

**Table 1: viscosity**

| **Composition** | **Viscosity (mPa.s, at 10°C, at a shear rate of 64 s⁻¹)** |
|---|---|
| Comparative example 1 (without protease) | 1107.9 |
| Example 1 (according to the invention) | 48.1 |

A strong decrease in viscosity has been observed in the plant-based composition according to the present invention (÷20 fold).

A significant improvement was observed in texture attributes. The plant-based compositions according to the present invention is less thick, less viscous and more processable.

### 3.3. Particle distribution

Measure of the particle distribution are presented in table 2 below:

**Table 2: particle distribution**

| Composition | Dx(10) (µm) | | Dx(50) (µm) | Dx(90) (µm) | D [4;3] (µm) | D [3;2] (µm) |
|---|---|---|---|---|---|---|
| Comparative example 1 (without protease) | | 0,077 | 0,35 | 6,76 | 2,6 | 0,19 |
| Example 1 (according to the invention) | | 0,123 | 8,22 | 62,3 | 20,7 | 0,39 |

## Claims

1. A plant-based composition comprising a mixture comprising:
i) a plant base comprising at least 5% w/w of plant protein and at least 1% w/w of fat;
ii) at least one endoprotease; and
iii) at least one exoprotease.

2. The plant-based composition according to claim 1, wherein the plant-based composition has a viscosity comprised between 1 and 200 mPa.s.

3. The plant-based composition according to claim 1 or 2, wherein the plant-based composition has a particle size distribution having at least 90% particles with a maximum dimension equal to or lower than 100 µm.

4. The plant-based composition according to any one of claims 1 to 3, further comprising water.

5. The pant-based composition according to any one of claims 1 to 4, further comprising a pH adjusting agent.

6. The pant-based composition according to any one of claims 1 to 5, further comprising at least one further ingredient selected from the group consisting of at least one flavoring agent, at least one sweetener, at least one fruit or at least one fruit preparation, at least one stabilizing agent, at least one coloring agents, at least one vitamin, oilseeds, nuts, cereals, and/or combinations thereof.

7. The plant-based composition according to any one of claims 1 to 6, comprising from 5 to 20% w/w of plant protein and from 3 to 10% w/w fat.

8. The plant-based composition according to any one of claims 1 to 7, wherein the plant protein is selected from the group consisting of soy protein, pulse protein, cereal protein, nut protein and mixture thereof.

9. A process for the preparation of a plant-based composition comprising the steps of:
a) providing a mixture comprising a plant base comprising at least 5% w/w of plant protein and at least 1% w/w of fat;
b) mixing the mixture with at least one endoprotease and at least one exoprotease;
c) processing the mixture to provide a plant-based composition having a viscosity comprised between 1 and 200 mPa.s.

10. The process according to claim 9, further comprising a step d) of heat treatment before and/or after the step b).

11. The process according to claim 9 or 10, further comprising a step e) of homogenization before and/or after the step b).

12. The process according to any one of claims 9 to 11, further comprising a step of f) concentration of the mixture before or after the step of b).

13. The process according to any one of claims 9 to 12, wherein said concentration step f) is carried out by ultrafiltration.

14. The process according to any one of claims 9 to 13, wherein the plant-based composition has a particle size distribution having at least 90% particles with a maximum dimension equal to or lower than 100 µm.

15. A plant-based composition obtained by the process as defined in any one of claims 9 to 14.

16. A plant-based beverage comprising a pant-based composition as defined in any one of the preceding claims.
